# FASCICULE DE BREVET EUROPEEN

(11) **EP 2 517 040 B1**
(45) Date de publication et mention de la délivrance du brevet: **19.09.2018**
(21) Numéro de dépôt: 10801660.1
(22) Date de dépôt: 13.12.2010
(51) Int. Cl.: G01S 5/00

(54) **SYSTÈME DE SUIVI DE NAVIRES EN MER.**
SYSTEM ZUR ORTUNG VON SCHIFFEN AUF SEE
SYSTEM FOR TRACKING SHIPS AT SEA

(30) Priorité: 21.12.2009 FR 0906205
(43) Date de publication de la demande: 31.10.2012
(73) Titulaire: Airbus Defence and Space SAS, 78130 Les Mureaux (FR)
(72) Inventeur: LAINE, Robert, St Xandre 17138 (FR)
(74) Mandataire: Gevers & Orès
(86) Numéro de dépôt international: PCT/FR2010/052682
(87) Numéro de publication internationale: WO 2011/083230

(56) Documents cités:
- EP-A1- 0 748 084
- EP-A2- 0 921 411
- WO-A1-2007/110512

## Description

La présente invention concerne un système de suivi de navires en mer, en particulier en haute mer.

Un tel suivi peut être intéressant aussi bien pour les équipages des navires notamment pour des raisons de sécurité, que pour les armateurs qui souhaitent connaître la position de leurs navires, ou les autorités maritimes qui doivent faire respecter la sécurité dans une zone économique donnée.

On connaît différentes techniques pour suivre des navires en haute mer, à savoir notamment :
a) une observation visuelle à partir de points de passage obligés ;
b) une observation radar à partir de stations côtières, et une interrogation radio des navires ;
c) une écoute, à partir de stations côtières, de signaux d'identification relatives à un système d'identification automatique de type AIS («Automatic Identification System» en anglais) ; et
d) une écoute de ces signaux d'identification de type AIS à partir de satellites placés en orbite basse.

Le système d'identification automatique AIS est un système d'échanges automatisé de messages entre navires par radiocommunication à très hautes fréquences VHF, qui permet aux navires et aux systèmes de surveillance du trafic maritime de connaître notamment l'identité, le statut, la position et la route des navires se situant dans une zone de navigation donnée. Ce système AIS permet, en particulier, d'identifier les navires lorsqu'une reconnaissance visuelle ou radar n'est plus possible (nuit, temps de brume, faible écho radar).

Toutefois, ces différentes techniques de suivi de navires présentent des inconvénients. En particulier, les techniques a), b) et c) précitées sont limitées à l'horizon visible depuis la station d'observation, c'est-à-dire à quelques dizaines de kilomètres des côtes. De plus, concernant la solution c), le système AIS utilisé n'est pas sécurisé, et il est aisé de modifier les données transmises de manière à afficher une position et/ou une identité fausses.

Quant à la technique d), elle fournit en principe une couverture complète des mers du globe terrestre.

Toutefois, en raison de la structure du système AIS qui engendre un cadencement correct de transmission des signaux uniquement dans des cellules de quelques dizaines de kilomètres de diamètre alors qu'un satellite reçoit simultanément les signaux de plusieurs cellules, l'émission simultanée de signaux AIS à partir de plusieurs cellules rend leur réception quasi-impossible dans des zones à fort trafic maritime (corne de l'Afrique, cap de Bonne Espérance, milieu de l'Atlantique où se croisent plusieurs routes, ...). De plus, avec cette technique d), il existe souvent un retard significatif (de plus d'une heure) dans la retransmission des informations collectées par les satellites en orbite basse, puisqu'il est nécessaire d'attendre que ces derniers passent au-dessus d'une station de base pour renvoyer les informations collectées. Par ailleurs, cette technique d) dépend également de l'intégrité des informations AIS engendrées.

Par ailleurs, on connaît, par le document WO-2007/110512, un système de suivi de navires en mer. Ce système comporte :
- des terminaux montés sur des bouées flottantes. Chacune desdites bouées flottantes comprend un terminal qui comporte :
   ▪ des moyens pour détecter des signaux d'identification émis par des navires environnants qui se trouvent dans une zone de collecte située autour du navire de collecte correspondant ;
   ▪ des moyens pour déterminer la position courante du navire de collecte correspondant ; et
   ▪ des moyens pour enregistrer des informations d'identification qui comprennent les signaux d'identification détectés et la position courante du navire de collecte lors de cette détection ;
- un système de transmission de données par satellites, qui permet de transmettre des données entre lesdits terminaux et au moins un centre de contrôle ; et
- ledit centre de contrôle.

En outre, on connaît, par le document EP-0 748 084, un mode de communication entre une station centrale et des unités individuelles, par l'intermédiaire d'une liaison satellitaire.

La présente invention a pour objet de remédier aux inconvénients précités. Elle concerne un système de suivi de navires en mer, en particulier en haute mer, qui permet d'apporter une solution économique pour assurer un suivi sécurisé des navires, et ceci notamment dans des régions de fort trafic maritime.

A cet effet, selon l'invention, ledit système de suivi de navires en mer, est remarquable en ce qu'il comporte :
- des terminaux montés sur un nombre prédéterminé de navires de collecte, chacun desdits navires de collecte comprenant un terminal qui comporte :
   ▪ des moyens pour détecter des signaux d'identification émis par des navires environnants qui se trouvent dans une zone de collecte située autour du navire de collecte correspondant ;
   ▪ des moyens pour déterminer la position courante du navire de collecte correspondant ; et
   ▪ des moyens pour enregistrer des informations d'identification qui comprennent les signaux d'identification détectés et la position courante du navire de collecte lors de cette détection ;
- un système de transmission de données par satellites, qui permet de transmettre des données entre lesdits terminaux qui sont montés sur les navires de collecte et au moins un centre de contrôle ; et
- ledit centre de contrôle qui comprend au moins :
   ▪ des moyens pour engendrer des requêtes qui sont transmises par ledit système de transmission de données auxdits terminaux pour leur demander de fournir les informations d'identification enregistrées ;
   ▪ des moyens pour recevoir des informations d'identification fournies par lesdits terminaux, via ledit système de transmission de données, en réponse à une requête ; et
   ▪ des moyens pour analyser les informations d'identification reçues.

Ainsi, grâce à l'invention, les signaux d'identification sont tout d'abords collectés par un nombre limité de navires de collecte, avant d'être transmises sous forme d'informations d'identification au centre de contrôle par l'intermédiaire de satellites du système de transmission de données.

De plus, une transmission d'informations d'identification est uniquement réalisée en réponse à une requête. Par conséquent, le centre de contrôle qui gère la génération et l'émission de requêtes maîtrise la réception des données, ce qui lui permet de ne pas se laisser submerger par un flux d'informations trop important, et ceci quel que soit le trafic. De plus, ce flux d'informations est réduit par l'utilisation de navires de collecte qui sont les seuls à envoyer des informations relatives aux navires (situés dans la zone de collecte associée) audit centre de contrôle.

En outre, grâce à l'invention, les informations d'identification comprennent, en plus des signaux d'identification reçus des navires environnants, la position du navire de collecte lors de cette détection. Cette position permet de vérifier que les informations d'identification ne sont pas erronées, en vérifiant que la position fournie par un signal d'identification d'un navire est compatible avec la position effective du navire de collecte qui a détecté ce signal d'identification.

Par ailleurs, comme le système de suivi conforme à l'invention, utilise un système de transmission de données par satellites, il est en mesure de fonctionner partout sur le globe terrestre et notamment en haute mer, loin des côtes.

De préférence, ledit centre de contrôle comporte des moyens pour émettre, de façon séquentielle, des requêtes à destination des terminaux situés dans une zone prédéterminée, par exemple une zone d'intérêt particulier. Ceci permet au centre de contrôle de recevoir de façon coordonnée les informations d'identification.

Dans un mode de réalisation particulier, chaque terminal comporte un boîtier sécurisé et des moyens d'alarme qui sont formés de manière à émettre un signal d'alarme à destination dudit centre de contrôle via ledit système de transmission de données, lors d'une ouverture dudit boîtier sécurisé.

En outre, avantageusement, chaque terminal comporte, de plus :
- des moyens d'alimentation électrique ;
- au moins une antenne de réception de signaux d'identification ;
- au moins une antenne de réception de données de positionnement ; et
- au moins une antenne de transmission de données.

De plus, un terminal peut également comporter :
- des moyens pour coder les informations d'identification enregistrées, et ceci de préférence selon un codage spécifique audit terminal ; et/ou
- des moyens de réception de données permettant de suivre à distance l'état d'un navire.

Par ailleurs, de façon avantageuse, ledit centre de contrôle comporte, de plus, des moyens pour archiver les informations d'identification et pour les rendre accessibles à des utilisateurs.

Par ailleurs, dans un mode de réalisation particulier, ledit système de suivi comporte, de plus, des moyens pour activer et désactiver à distance une transmission de données à partir des terminaux.

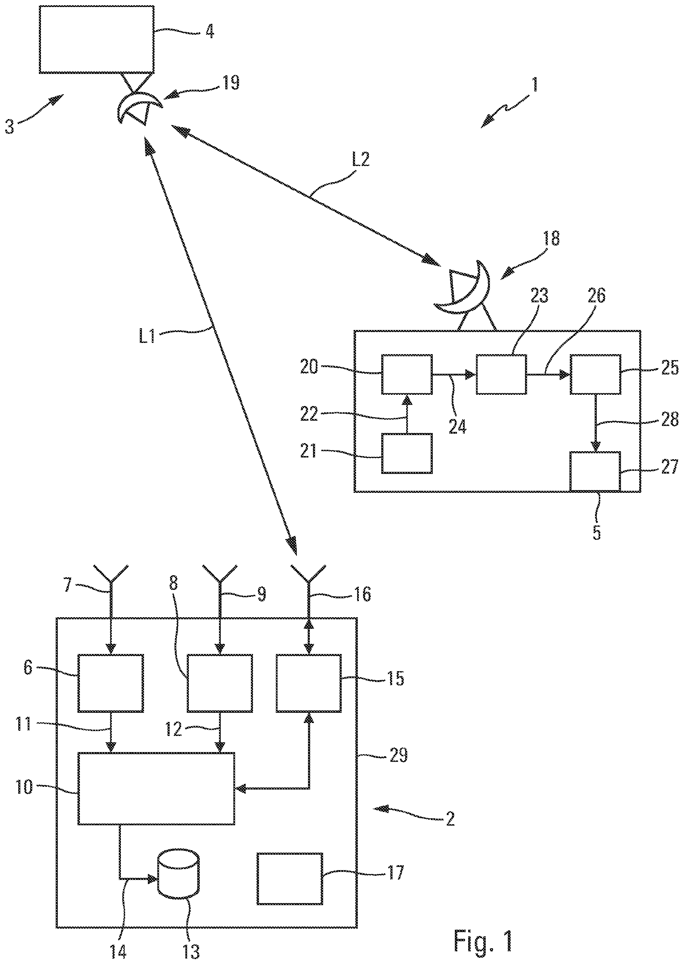

L'unique figure du dessin annexé fera bien comprendre comment l'invention peut être réalisée. Cette figure unique est le schéma synoptique d'un système conforme à l'invention de suivi de navires en mer.

Ledit système 1 conforme à l'invention comporte :
- une pluralité de terminaux 2, dont un seul a été représenté sur la figure pour des raisons de simplification du dessin, chacun desdits terminaux 2 étant monté sur un navire dit de collecte, les navires de collecte étant en nombre limité ;
- un système 3 de transmission de données comprenant des satellites 4, dont on a représenté un seul sur la figure, de nouveau pour des raisons de simplification du dessin ; et
- au moins un centre de contrôle 5 qui est prévu à poste fixe au sol.

En outre, chaque terminal 2 monté sur un navire de collecte comporte, comme représenté sur la figure :
- un récepteur 6 qui coopère avec au moins une antenne 7 et qui est susceptible de recevoir des signaux d'identification de type AIS, précisés ci-dessous, qui sont émis par des navires environnants se trouvant dans une zone de collecte particulière située autour du navire de collecte pourvu dudit terminal 2, par exemple dans un cercle centré autour de la position du navire de collecte, dont le rayon (par exemple quelques dizaines de kilomètres) est inférieur à la distance maximale de détection de signaux d'identification par les moyens 6 et 7 ;
- un récepteur 8 usuel, qui coopère avec une antenne appropriée 9 pour recevoir des informations d'un système usuel de positionnement par satellites non représenté, notamment de type GPS («Global Positioning System» en anglais). Ces informations permettent de déterminer, de façon usuelle, la position courante du navire de collecte ; et
- des moyens 10 qui sont reliés par l'intermédiaire de liaisons 11 et 12 respectivement auxdits récepteurs 6 et 8 et qui sont formés de manière à enregistrer des informations d'identification.

Selon l'invention, des informations d'identification comprennent des signaux d'identification détectés par le récepteur 6 et la position courante du navire de collecte au moment de cette détection, qui est fournie par le récepteur 8, ainsi que l'identité dudit navire de collecte.

Lesdits moyens 10 enregistrent ces informations d'identification dans une mémoire 13 de stockage de données, comme illustré par une liaison 14.

Le système 1 conforme à l'invention coopère donc avec un système d'identification automatique, de préférence de type AIS («Automatic Identification System» en anglais), qui est un système d'échanges automatisé de messages entre navires par radiocommunication à très hautes fréquences de type VHF. Dans un mode de réalisation particulier, un navire quelconque qui est équipé d'un système de type AIS transmet de façon périodique (entre 2 et 10 secondes généralement), notamment les informations suivantes :
- le numéro d'identification du navire ;
- un statut de navigation tel que : amarré, au mouillage, en opération de pêche, ...
- la route du navire sur le fond ;
- la vitesse sur le fond ;
- la vitesse de changement de cap ;
- la position en longitude et en latitude ;
- le cap vrai ; et
- l'heure.

De plus, généralement, les informations suivantes sont également transmises de façon périodique par le système AIS, par exemple toutes les six minutes:
- le nom du navire ;
- le type de bâtiment ;
- les dimensions du navire ;
- la position de l'antenne AIS sur le navire ;
- le type d'instrument de positionnement satellitaire ;
- la destination ;
- l'estimation de l'heure d'arrivée à destination ; et
- le nombre d'hommes d'équipage.

Chaque terminal 2 comporte, de plus, des moyens de transmission de données 15 qui coopèrent avec une antenne 16 et qui sont susceptibles d'émettre des informations en direction du système de transmission de données 3, ainsi que de recevoir des informations dudit système de transmission de données 3, comme illustré par une liaison L1 sur la figure. Lesdits moyens 15 sont en contact soit de façon continue, soit de façon intermittente avec les satellites 4 du système 3.

Ledit terminal 2 peut également être équipé de capteurs ou de moyens de réception de signaux propres à un navire et à sa cargaison et permettant de suivre à distance son état.

Ledit terminal 2 comporte également des moyens d'alimentation électrique 17. Ces moyens d'alimentation électrique 17 peuvent être de tout type. Ils peuvent notamment comporter une batterie tampon qui est rechargée par l'alimentation de bord du navire et/ou un panneau solaire installé sur le navire et/ou toute autre source d'énergie.

Par ailleurs, ledit système de transmission de données 3 comporte une pluralité de satellites de communication 4 usuels, qui sont placés en orbite basse et/ou à haute altitude et qui permettent la transmission d'instructions vers les terminaux 2 et la réception des informations collectées par ces terminaux 2.

Par ailleurs, le centre de contrôle 5 qui est en contact avec les satellites 4 dudit système 3, comme illustré par une liaison L2, (via une antenne 18 qui coopère avec une antenne 19 des satellites 4), assure la gestion à distance des terminaux 2, le suivi des navires de collecte équipés de ces terminaux 2, ainsi que des navires situés dans les zones de collecte correspondantes. Ledit centre de contrôle 5 assure également la gestion et la diffusion de données utiles à des clients, comme précisé ci-dessous.

Ledit centre de contrôle 5 comporte des moyens 20 de gestion de transmission de données, qui coopèrent avec l'antenne 18 et qui permettent, via ledit système 3, d'émettre des instructions à destination (et de recevoir des informations en provenance) des différents terminaux 2 du système 1 conforme à l'invention.

Ainsi, grâce au système 1 conforme à l'invention, les signaux d'identification sont tout d'abord collectés par un nombre limité prédéterminé de navires de collecte, avant d'être transmis sous forme d'informations d'identification au centre de contrôle 5 par l'intermédiaire de satellites 4 du système de transmission de données 3.

En outre, ledit centre de contrôle 5 comporte également :
- des moyens 21 qui sont reliés par l'intermédiaire d'une liaison 22 auxdits moyens 20 et qui sont formés pour engendrer des requêtes qui sont transmises par le système de transmission de données 3 aux terminaux 2 pour leur demander de fournir des informations d'identification enregistrées ; et
- des moyens 23 qui sont reliés par l'intermédiaire d'une liaison 24 auxdits moyens 20 et qui sont formés de manière à analyser les informations d'identification fournies par les terminaux 2 et reçues par les moyens 20, en réponse à une requête.

Ledit système de contrôle 5 comporte également :
- des moyens 25 qui sont, par exemple, reliés par l'intermédiaire d'une liaison 26 auxdits moyens 23 et qui sont formés de manière à archiver les informations d'identification reçues et traitées ; et
- des moyens 27 qui sont, par exemple, reliés par l'intermédiaire d'une liaison 28 auxdits moyens 25 et qui sont formés de manière à rendre ces informations accessibles à des utilisateurs, en particulier à des clients, par exemple des armateurs, qui achètent ces informations. Les moyens 26 peuvent également être en mesure, dans ce cas, de gérer une éventuelle facturation des informations fournies.

Par ailleurs, chaque terminal 2 comporte un boîtier sécurisé 29 et des moyens d'alarme (non représentés) qui sont formés de manière à émettre un signal d'alarme à destination dudit centre de contrôle 5 via ledit système de transmission de données 3, lors d'une ouverture dudit boîtier sécurisé 29.

En outre, dans un mode de réalisation particulier, ledit système 1 comporte également des moyens non représentés pour activer et désactiver à distance une transmission de données à partir des terminaux 2.

Le système 1 conforme à l'invention fonctionne comme suit :
- les terminaux 2 qui sont installés, par exemple, sur le pont ou sur un mât des navires de collecte, pour présenter une bonne visibilité radioélectrique sur tout l'horizon, se mettent à l'écoute des communications par satellites ;
- les moyens 10 de chaque terminal 2 traitent, régulièrement, des signaux d'identification de type AIS reçus et les stockent dans la mémoire 13 avec la position courante reçue du récepteur 8. Dans un mode de réalisation particulier, lesdits moyens 10 réalisent un codage de ces données avec une clé qui est spécifique audit terminal 2, afin d'assurer la sécurité et l'intégrité lors des transmissions et traitements ultérieurs. En outre, pour réduire la quantité de données à transmettre, les moyens 10 peuvent être commandés de manière à stocker uniquement les changements de données et les comprimer ;
- le centre de contrôle 5 interroge, de façon séquentielle, via le système 3, les différents terminaux 2 situés dans des zones d'intérêt, et chaque terminal 2 fournit en réponse son identité, sa position ainsi que le contenu des signaux d'identification détectés et stockés depuis la dernière requête. De préférence, les signaux d'identification émis par un navire de collecte dans le cadre du système AIS sont également captés et traités par ce (ou un autre) navire de collecte comme les autres signaux d'identification émis par les navires situés dans sa zone de collecte ;
- le centre de contrôle 5 peut commander le rythme de transmission des terminaux 2 pour exercer un suivi rapproché dans une zone d'intérêt ;
- le centre de contrôle 5 archive et analyse les données reçues. Ces informations peuvent être recoupées dans le temps pour détecter des incohérences intentionnelles ou accidentelles. En particulier, le centre de contrôle 5 est en mesure de détecter des anomalies telles que la corruption de données AIS du navire de collecte ou des situations dangereuses en raison de la proximité d'autres navires, de côtes ou de phénomènes climatiques exceptionnels ; et
- le centre de contrôle 5 met ses données utiles à disposition de clients et assure la facturation de ce service.

Le système 1 conforme à l'invention présente, notamment, les avantages suivants :
- il fonctionne en haute mer, notamment grâce à l'utilisation de liaisons de communication par satellites 4 ;
- comme en plus des signaux d'identification, il fournit également la position du navire de collecte, il permet de vérifier la position indiquée dans les signaux d'identification ;
- le centre de contrôle 5 gère la réception des données, dont il a besoin, en particulier en émettant de façon coordonnée des requêtes de sorte que le système 1 conforme à l'invention peut être utilisé dans toutes les régions même dans celles présentant un fort trafic maritime ;
- la possibilité d'activer et de désactiver à distance la transmission des terminaux 2 permet de réduire le coût du trafic passant par le système de transmission de données 3, tout en maintenant la collecte des informations d'identification grâce à la mémoire des terminaux 2. En particulier, on peut arrêter la transmission satellitaire pour un navire de collecte, lorsque ce dernier se trouve dans une zone qui est couverte par un autre navire de collecte ; et
- le système 1 conforme à l'invention peut être mis en oeuvre de façon rapide et progressive, en utilisant des satellites de communication préexistants en attendant la mise en place de moyens dédiés.

## Revendications

1. Système de suivi de navires en mer, ledit système (1) comportant :
- des terminaux (2) montés sur un nombre prédéterminé de moyens de collecte, chacun desdits moyens de collecte comprenant un terminal (2) qui comporte :
▪ des moyens (6, 7) pour détecter des signaux d'identification émis par des navires environnants qui se trouvent dans une zone de collecte située autour du moyen de collecte correspondant ;
▪ des moyens (8, 9) pour déterminer la position courante du moyen de collecte correspondant ; et
▪ des moyens (10, 13) pour enregistrer des informations d'identification qui comprennent les signaux d'identification détectés et la position courante du moyen de collecte lors de cette détection ;
- un système de transmission de données (3) par satellites (4), qui permet de transmettre des données entre lesdits terminaux (2) et au moins un centre de contrôle (5) ;
- ledit centre de contrôle (5) comprenant au moins :
▪ des moyens (21) pour engendrer des requêtes qui sont transmises par ledit système de transmission de données (3) auxdits terminaux (2) pour leur demander de fournir les informations d'identification enregistrées ;
▪ des moyens (18, 20) pour recevoir des informations d'identification fournies par lesdits terminaux (2), via ledit système de transmission de données (3) ; et
▪ des moyens (23) pour analyser les informations d'identification reçues; le système comprenant en outre des moyens pour activer et désactiver à distance une transmission de données à partir des terminaux (2) tout en maintenant la collecte des informations d'identification grâce aux moyens (10, 13) pour enregistrer des informations d'identification; le système étant **caractérisé en ce que** lesdits moyens de collecte sont des navires dits de collecte, **en ce que** les terminaux (2) sont installés sur les navires de collecte pour présenter une bonne visibilité radioélectrique sur tout l'horizon, et **en ce que** lesdits moyens (18, 20) pour recevoir des informations d'identification fournies par lesdits terminaux (2), via ledit système de transmission de données (3), reçoivent des informations uniquement en réponse à une requête, la transmission étant désactivée pour un navire de collecte lorsque ce dernier navire de collecte se trouve dans une zone qui est couverte par un autre navire de collecte.

2. Système selon la revendication 1,
**caractérisé en ce que** chaque terminal (2) comporte un boîtier sécurisé (29) et des moyens d'alarme qui sont formés de manière à émettre un signal d'alarme à destination dudit centre de contrôle (5) via ledit système de transmission de données (3), lors d'une ouverture dudit boîtier sécurisé (29).

3. Système selon l'une des revendications 1 et 2,
**caractérisé en ce que** chaque terminal (2) comporte, de plus :
- des moyens d'alimentation électrique (17) ;
- au moins une antenne (7) de réception de signaux d'identification ;
- au moins une antenne (9) de réception de données de positionnement ; et
- au moins une antenne de transmission (18) qui coopère avec des satellites (4) du système de transmission de données (3).

4. Système selon l'une des revendications 1 à 3,
**caractérisé en ce que** chaque terminal (2) comporte, de plus, des moyens (10) pour coder les informations d'identification enregistrées, selon un codage spécifique audit terminal (2).

5. Système selon l'une quelconque des revendications 1 à 4, **caractérisé en ce que** chaque terminal (2) comporte, de plus, des moyens de réception de signaux propres à un navire.

6. Système selon l'une quelconque des revendications 1 à 5, **caractérisé en ce que** ledit centre de contrôle (5) comporte des moyens (20, 21, 18) pour émettre, de façon séquentielle, des requêtes à destination des terminaux (2) situés dans une zone prédéterminée.

7. Système selon l'une quelconque des revendications 1 à 6, **caractérisé en ce que** ledit centre de contrôle (5) comporte, de plus, des moyens (25, 27) pour archiver les informations d'identification et pour les rendre accessibles à des utilisateurs.

## Patentansprüche

1. System zur Ortung von Schiffen auf See, wobei das System (1) Folgendes aufweist:
- Terminals (2), die auf einer vorbestimmten Anzahl von Sammelmitteln installiert sind, wobei jedes Sammelmittel ein Terminal (2) umfasst, das Folgendes aufweist:
▪ Mittel (6, 7) zum Detektieren von Identifikationssignalen, die von umgebenden Schiffen ausgegeben werden, die sich in einem Sammelgebiet um das entsprechende Sammelmittel herum befinden;
▪ Mittel (8, 9) zur Bestimmung der aktuellen Position des entsprechenden Sammelmittels; und
▪ Mittel (10, 13) zur Aufzeichnung von Identifikationsinformationen, welche die detektierten Identifikationssignale und die aktuelle Position des Sammelmittels bei dieser Detektion umfassen;
- ein Datenübertragungssystem (3) über Satelliten (4), das die Datenübertragung zwischen diesen Terminals (2) und mindestens einer Steuerzentrale (5) ermöglicht;
- wobei die Steuerzentrale (5) mindestens Folgendes umfasst:
▪ Mittel (21) zum Erzeugen von Anfragen, die von dem Datenübertragungssystem (3) an die Terminals (2) übertragen werden, um sie aufzufordern, die aufgezeichneten Identifikationsinformationen bereitzustellen;
▪ Mittel (18, 20) zum Empfangen von Identifikationsinformationen, die von den Terminals (2) über das Datenübertragungssystem (3) als Antwort auf eine Anfrage bereitgestellt werden; und
▪ Mittel (23) zur Analyse der empfangenen Identifikationsinformationen;
wobei das System weiter Mittel zum Fernaktivieren und - deaktivieren einer Datenübertragung von den Terminals (2) umfasst, während die Erfassung von Identifikationsinformationen durch die Mittel (10, 13) zur Aufzeichnung von Identifikationsinformationen aufrechterhalten wird;
wobei das System **dadurch gekennzeichnet ist, dass** die Sammelmittel sogenannte Feederschiffe sind, dass die Terminals (2) auf den Feederschiffen installiert sind, um eine gute Funksichtbarkeit über den gesamten Horizont zu gewährleisten, und dass die Mittel (18, 20) zum Empfangen von Identifikationsinformationen, die von den Terminals (2) über das Datenübertragungssystem (3) bereitgestellt werden, Informationen nur als Antwort auf eine Anfrage empfangen, wobei die Übertragung für ein Feederschiff deaktiviert wird, wenn sich dieses in einem Bereich befindet, der von einem anderen Feederschiff abgedeckt wird.

2. System nach Anspruch 1,
**dadurch gekennzeichnet, dass** jedes Terminal (2) ein gesichertes Gehäuse (29) und Alarmmittel aufweist, die derart ausgebildet sind, dass sie beim Öffnen des gesicherten Gehäuses (29) ein Alarmsignal an die Steuerzentrale (5) über das Datenübertragungssystem (3) senden.

3. System nach einem der Ansprüche 1 und 2,
**dadurch gekennzeichnet, dass** jedes Terminal (2) ferner Folgendes aufweist:
- Stromversorgungsmittel (17);
- mindestens eine Antenne (7) zum Empfangen von Identifikationssignalen;
- mindestens eine Antenne (9) zum Empfangen von Positionsdaten; und
- mindestens eine Sendeantenne (18), die mit Satelliten (4) des Datenübertragungssystems (3) zusammenwirkt.

4. System nach einem der Ansprüche 1 bis 3,
**dadurch gekennzeichnet, dass** jedes Terminal (2) ferner Mittel (10) zum Codieren der aufgezeichneten Identifikationsinformationen gemäß einer für das Terminal (2) spezifischen Codierung aufweist.

5. System nach einem der Ansprüche 1 bis 4,
**dadurch gekennzeichnet, dass** jedes Terminal (2) ferner Mittel zum Empfangen von spezifischen Signalen eines Schiffes aufweist.

6. System nach einem der Ansprüche 1 bis 5,
**dadurch gekennzeichnet, dass** die Steuerzentrale (5) Mittel (20, 21, 18) zum sequenziellen Senden von Anfragen an Terminals (2) aufweist, die sich in einem vorbestimmten Bereich befinden.

7. System nach einem der Ansprüche 1 bis 6,
**dadurch gekennzeichnet, dass** die Steuerzentrale (5) ferner Mittel (25, 27) zum Archivieren von Identifikationsinformationen und zu deren Zugänglichmachung für Benutzer aufweist.

## Claims

1. A tracking system for ships at sea, said system (1) comprising:
- terminals (2) mounted on a predetermined number of collecting means, each of said collecting means comprising a terminal (2) including:
• means (6, 7) for detecting identification signals emitted by surrounding ships located in a collecting area around the corresponding collecting ship;
• means (8, 9) for determining the current position of the corresponding collecting means; and
• means (10, 13) for recording identification information comprising the identification signals being detected and the current position of the collecting means upon such detection;
- a satellite (4) data transmission system (3), allowing data to be transmitted between said terminals (2) which are mounted on the collecting ships and at least one monitoring centre (5);
- said monitoring centre (5) comprising at least:
• means (21) for generating requests which are transmitted by said data transmission system (3) to said terminals (2) so as to ask them to provide the recorded identification information;
• means (18, 20) for receiving identification information provided by said terminals (2), via said data transmission system (3), in response to a request; and
• means (23) for analyzing the identification information being received;
- said system comprising means to remotely activate and inactivate a data transmission from the terminals 2 while holding the collection of identification information thanks to means (10, 13) for recording identification information;
said system being **characterized in that** said collecting means are ships said collecting ships, **in that** said terminals (2) are arranged on the collecting ship so as to present a good radio electrical visibility on the whole horizon, and **in that** said means (18, 20) for receiving identification information provided by said terminals (2), via said data transmission system (3)n receive uniquely information in response to a request, said transmission being inactivated for a collecting ship when the latter is in an area covered by another collecting ship.

2. The system according to claim 1,
**characterized in that** each terminal (2) comprises a secure housing (29) and alarm means being formed so as to send an alarm signal at destination of said monitoring centre (5) via said data transmission system (3), upon an opening of said secure housing.

3. The system according to any of claims 1 and 2, **characterized in that** each terminal (2) comprises in addition:
- electrical power means;
- at least one reception antenna (7) for the identification signals;
- at least one reception antenna (9) for positioning data; and
- at least one transmission antenna (18) cooperating with satellites (4) of the data transmission system (3).

4. The system according to any of claims 1 to 3, **characterized in that** each terminal (2) comprises in addition means (10) for coding the recorded identification information according to a coding being specific to said terminal (2).

5. The system according to any of claims 1 to 4, **characterized in that** each terminal (2) also comprises reception means for signals being specific to a ship.

6. The system according to any of claims 1 to 5, **characterized in that** said monitoring centre (5) comprises means (20, 21, 18) for sequentially sending requests at destination of the terminals (2) located in a determined area.

7. The system according to any of claims 1 to 6, **characterized in that** said monitoring centre (5) comprises in addition means (25, 27) for storing the identification information and making them accessible to users.
